# EUROPÄISCHE PATENTSCHRIFT

(11) **EP 4 153 941 B1**
(45) Veröffentlichungstag und Bekanntmachung des Hinweises auf die Patenterteilung: **05.11.2025**
(21) Anmeldenummer: 21721424.6
(22) Anmeldetag: 21.04.2021
(51) Int. Cl.: G01C 21/00, B60G 17/0165

(54) **VERFAHREN ZUM ERFASSEN VON FAHRBAHNBELASTUNGEN**
METHOD FOR DETERMINING OF LANE LOADS
MÉTHODE POUR DÉTERMINER DES CHARGES DE VOIES ROUTIÈRES

(30) Priorität: 18.05.2020 DE 102020206221
(43) Veröffentlichungstag der Anmeldung: 29.03.2023
(73) Patentinhaber: ZF Friedrichshafen AG, 88046 Friedrichshafen (DE)
(72) Erfinder: PAPE, Dennis, 49179 Ostercappeln (DE)
(74) Vertreter: ZF Friedrichshafen AG
(86) Internationale Anmeldenummer: PCT/EP2021/060292
(87) Internationale Veröffentlichungsnummer: WO 2021/233628

(56) Entgegenhaltungen:
- EP-A1- 2 955 479
- EP-A1- 3 534 114
- STANCZYK DANIEL ET AL: "Heavy Traffic Data Collection and Detection of Overloaded HGV", PROCEDIA - SOCIAL AND BEHAVIORAL SCIENCES, vol. 48, 1 January 2012 (2012-01-01), pages 133 - 143, XP093261759, ISSN: 1877-0428, Retrieved from the Internet <URL:https://pdf.sciencedirectassets.com/277811/1-s2.0-S1877042812X00193/1-s2.0-S1877042812027309/main.pdf?hash=0f672d87b7e02cb83e3cafc6d331bbd64dd08eb3de47074bd0856bf82e5f6cf7&host=68042c943591013ac2b2430a89b270f6af2c76d8dfd086a07176afe7c76c2c61&pii=S1877042812027309&tid=spdf-2c6b98c3-070f-4b89-997b-17c> [retrieved on 20250321], DOI: 10.1016/j.sbspro.2012.06.994
- BLAB RONALD ET AL: "Measurements Of The Lateral Distribution Of Heavy Vehicles And Its Effects On The Design Of Road Pavements", THE 4TH INTERNATIONAL SYMPOSIUM ON HEAVY VEHICLE WEIGHTS AND DIMENSIONS, 25 June 1995 (1995-06-25), Ann Arbor, pages 389 - 395, XP093262274, Retrieved from the Internet <URL:https://hvttforum.org/wp-content/uploads/2019/11/Measurements-Of-The-Lateral-Distribution-Of-Heavy-Vehicles-And-Its-Effects-On-The-Design-Of-Road-Pavements-Blab-.pdf> [retrieved on 20250321]
- DODOO N A ET AL: "A new approach for allocating pavement damage between heavy goods vehicles for road-user charging", TRANSPORT POLICY, PERGAMON, AMSTERDAM, NL, vol. 12, no. 5, 1 September 2005 (2005-09-01), pages 419 - 430, XP027617766, ISSN: 0967-070X, [retrieved on 20050901]

## Beschreibung

Die Erfindung betrifft ein Verfahren zum Erfassen von Fahrbahnbelastungen.

Städte oder Gemeinden wissen oft nicht, wie stark ihre Fahrbahnen belastet werden. Um Informationen über die Belastung von Fahrbahnen zu gewinnen gibt es den Ansatz, Drucksensoren in Straßen zu implementieren. Derartige Sensoren sind allerdings sehr kostspielig. Ferner ist ein Austausch der Drucksensoren teuer. N.A.Dodoo, N.Thorpe, "A new approach for allocating pavement damage between heavy-goods vehicles for road-user charging", Transport Policy 12 (2005) 419-430 offenbart die Erfassung von Fahrbahnbelastungen über die gemessene Achslast eines Schwerlastfahrzeugs.

Ausgehend hiervon liegt der Erfindung die Aufgabe zugrunde, eine kostengünstige Möglichkeit zum Erfassen von Fahrbahnbelastungen bereitzustellen.

Diese Aufgabe wird erfindungsgemäß mit einem Verfahren nach Anspruch 1 gelöst. Bevorzugte Weiterbildungen des Verfahrens sind in den Unteransprüchen und in der nachfolgenden Beschreibung gegeben.

Ein Verfahren zum Erfassen von Fahrbahnbelastungen, ist insbesondere dadurch weitergebildet, dass
- eine Straßenkarte bereitgestellt wird, die Informationen über den örtlichen Verlauf mehrerer Fahrbahnen umfasst,
- für mehrere Fahrzeuge jeweils ein, insbesondere aktueller, Fahrzeugort, vorzugsweise automatisch, erfasst und wenigstens ein diesen Fahrzeugort charakterisierendes Fahrzeugortssignal bereitgestellt wird,
- die Fahrzeuge unter Verwendung und/oder durch Auswertung der Fahrzeugortssignale und der Straßenkarte, vorzugsweise automatisch, den Fahrbahnen zugeordnet werden,
- für jedes Fahrzeug eine, insbesondere aktuelle, Fahrzeugladungsmasse, vorzugsweise automatisch, erfasst und wenigstens ein diese Fahrzeugladungsmasse charakterisierendes Fahrzeugladungsmassesignal bereitgestellt wird, und
- für jede Fahrbahn unter Verwendung und/oder durch Auswertung der Fahrzeugladungsmassesignale der ihr zugeordneten Fahrzeuge, vorzugsweise automatisch, wenigstens ein eine, insbesondere durch diese Fahrzeuge und/oder deren
Fahrzeugladungsmassen hervorgerufene, Fahrbahnbelastung, insbesondere der jeweiligen Fahrbahn, charakterisierendes Fahrbahnbelastungssignal erzeugt wird.

Somit ist es möglich, Fahrbahnbelastungen zu erfassen. Da die zur Realisierung des Verfahrens verwendete Sensorik in der Regel bereits in aktuellen Fahrzeugen vorhanden ist, können auch die Kosten relativ gering gehalten werden.

Bevorzugt werden die Fahrzeuge, insbesondere unter Verwendung und/oder durch Auswertung der Fahrzeugortssignale und der Straßenkarte, denjenigen Fahrbahnen zugeordnet, auf deren örtlichen Verläufen die Fahrzeugorte der Fahrzeuge liegen. Vorzugsweise wird jedes Fahrzeug, insbesondere unter Verwendung und/oder durch Auswertung des jeweiligen Fahrzeugortssignals und der Straßenkarte, einer oder derjenigen Fahrbahn der Fahrbahnen zugeordnet, auf deren örtlichen Verlauf der Fahrzeugort des jeweiligen Fahrzeugs liegt. Vorteilhaft wird wenigstens eines der Fahrzeuge, insbesondere unter Verwendung und/oder durch Auswertung seines Fahrzeugortssignals und der Straßenkarte, einer oder derjenigen Fahrbahn der Fahrbahnen zugeordnet, auf deren örtlichen Verlauf der Fahrzeugort des wenigstens einen Fahrzeugs liegt.

Gemäß einer Weiterbildung weist jedes Fahrzeug eine Ladungsmasseerfassungseinheit auf, mittels welcher für das jeweilige Fahrzeug die Fahrzeugladungsmasse erfasst und das wenigstens eine Fahrzeugladungsmassesignal erzeugt und/oder bereitgestellt wird. Bevorzugt bildet oder umfasst bei wenigstens einem oder bei mehreren oder bei jedem der Fahrzeuge die Ladungsmasseerfassungseinheit wenigstens einen Höhenstandsensor, mittels welchem vorzugsweise eine Einfederung des wenigstens einen oder des jeweiligen Fahrzeugs erfasst wird. Die Einfederung ist abhängig von der Fahrzeugladungsmasse. Ein Höhenstandsensor ist somit zur Erfassung der Fahrzeugladungsmasse geeignet. Ferner ist ein Höhenstandsensor bereits in vielen Fahrzeugen vorhanden. Ergänzend oder alternativ weist wenigstens eines oder wenigstens ein anderes der Fahrzeuge eine, insbesondere ein gasförmiges Federmedium umfassende, Luftfederung auf. In diesem Fall umfasst die Ladungsmasseerfassungseinheit dieses Fahrzeugs bevorzugt wenigstens einen Drucksensor, mittels welchem z.B. ein Druck des Federmediums erfasst wird. Der Druck des Federmediums ist abhängig von der Fahrzeugladungsmasse. Der Drucksensor ist somit zur Erfassung der Fahrzeugladungsmasse geeignet. Das Federmedium ist vorzugsweise Luft, insbesondere Druckluft.

Gemäß einer Ausgestaltung weist jedes Fahrzeug eine Ortungseinheit auf, mittels welcher für das jeweilige Fahrzeug der Fahrzeugort erfasst und das wenigstens eine Fahrzeugortssignal erzeugt und/oder bereitgestellt wird. Bevorzugt bildet oder umfasst bei wenigstens einem oder bei jedem der Fahrzeuge die Ortungseinheit ein globales Positionsbestimmungssystem (GPS), mittels welchem vorzugsweise die oder eine globale Position des wenigstens einen oder des jeweiligen Fahrzeugs erfasst wird.

Gemäß einer Weiterbildung wird das wenigstens eine Fahrbahnbelastungssignal jeder Fahrbahn oder werden die Fahrbahnbelastungssignale mittels einer Auswerteeinheit erzeugt. Die Auswerteeinheit steht bevorzugt mit der Ladungsmasseerfassungseinheit und/oder mit der Ortungseinheit in, vorzugsweise drahtloser, Kommunikationsverbindung oder Funkverbindung. Vorteilhaft kommuniziert die Auswerteeinheit mit der Ladungsmasseerfassungseinheit jedes Fahrzeugs und/oder mit der Ortungseinheit jedes Fahrzeugs, insbesondere drahtlos, beispielsweise per Funk. Bevorzugt ist die Auswerteeinheit mit der Ladungsmasseerfassungseinheit jedes Fahrzeugs und/oder mit der Ortungseinheit jedes Fahrzeugs, insbesondere drahtlos, beispielsweise per Funk, verbunden und/oder verbindbar. Die Auswerteeinheit ist insbesondere im Abstand zu und/oder entfernt von den Fahrzeugen vorgesehen und/oder angeordnet.

Die Auswerteeinheit umfasst bevorzugt eine Empfangseinheit, mittels welcher insbesondere die Fahrzeugortssignale und die Fahrzeugladungsmassesignale, vorzugsweise drahtlos und/oder per Funk, empfangen werden und/oder empfangbar sind. Vorteilhaft umfasst die Auswerteeinheit eine Recheneinheit, mittels welcher insbesondere die Fahrbahnbelastungssignale erzeugt werden und/oder erzeugbar sind. Bevorzugt umfasst die Auswerteeinheit eine Speichereinheit, in der insbesondere die Straßenkarte oder die Straßenkarte charakterisierende Straßenkarteninformationen gespeichert sind.

Die Straßenkarte liegt vorzugsweise in elektronischer Form und/oder in Form von, insbesondere elektronischen, Daten und/oder in Form von Software vor. Vorteilhaft handelt es sich um eine elektronische Straßenkarte. Bevorzugt ist die Straßenkarte in der oder einer Speichereinheit gespeichert. Vorteilhaft umfasst die Auswerteeinheit die Speichereinheit.

Jedes Fahrzeug umfasst bevorzugt eine Sendeeinheit, mittels welcher insbesondere das wenigstens eine Fahrzeugortssignal und das wenigstens eine Fahrzeugladungsmassesignal des jeweiligen Fahrzeugs, vorzugsweise zu der Auswerteeinheit und/oder zu der Empfangseinheit, insbesondere drahtlos und/oder per Funk, übertragen werden und/oder übertragbar sind. Die Sendeeinheit jedes Fahrzeugs ist vorzugsweise mit Ladungsmasseerfassungseinheit und der Ortungseinheit des jeweiligen Fahrzeugs verbunden.

Bevorzugt ist oder wird von jedem Fahrzeug und/oder mittels der Sendeeinheit jedes Fahrzeugs wenigstens ein Fahrzuginformationssignal, insbesondere des jeweiligen Fahrzeugs, vorzugsweise zu der Auswerteeinheit und/oder zu der Empfangseinheit, insbesondere drahtlos und/oder per Funk, übertragen und/oder übertragbar. Vorteilhaft ist oder wird mittels der Auswerteeinheit und/oder der Empfangseinheit wenigstens ein oder das wenigstens eine Fahrzuginformationssignal jedes Fahrzeugs, vorzugsweise drahtlos und/oder per Funk, empfangen und/oder empfangbar. Das wenigstens eine Fahrzeuginformationssignal jedes Fahrzeugs umfasst bevorzugt das wenigstens eine Fahrzeugortssignal und das wenigstens eine Fahrzeugladungsmassesignal des jeweiligen Fahrzeugs.

Bevorzugt ist oder wird jedem Fahrzeug ein Leerfahrzeugmassesignal zugeordnet, welches vorzugsweise die Masse des jeweiligen Fahrzeugs im leeren und/oder unbeladenen Zustand charakterisiert. Ein Fahrzeug im leeren und/oder unbeladenen Zustand wird insbesondere auch als Leerfahrzeug bezeichnet. Die Masse eines Leerfahrzeugs wird z.B. auch als Leerfahrzeugmasse bezeichnet. Vorzugsweise ist oder wird für jedes Fahrzeug das Leerfahrzeugmassesignal erzeugt und/oder bereitgestellt und/oder gespeichert. Vorteilhaft wird für jede Fahrbahn unter Verwendung und/oder durch Auswertung der Fahrzeugladungsmassesignale der ihr zugeordneten Fahrzeuge und der Leerfahrzeugmassesignale der ihr zugeordneten Fahrzeuge das wenigstens eine Fahrbahnbelastungssignal erzeugt. Bevorzugt wird für jede Fahrbahn das wenigstens eine Fahrbahnbelastungssignal zusätzlich unter Verwendung und/oder durch Auswertung der Leerfahrzeugmassesignale der ihr zugeordneten Fahrzeuge erzeugt. Somit können nicht nur die Fahrzeugladungsmassen, sondern auch die Leerfahrzeugmassen berücksichtigt werden. Das Leerfahrzeugmassesignal jedes Fahrzeugs ist oder wird z.B. in der Speichereinheit der Auswerteeinheit gespeichert und/oder ist in dem jeweiligen Fahrzeug gespeichert und/oder hinterlegt und/oder ist oder wird beispielsweise mittels der Sendeeinheit des jeweiligen Fahrzeugs an die Auswerteeinheit, vorzugsweise drahtlos und/oder per Funk, übertragbar und/oder übertragen. Bevorzugt umfasst das wenigstens eine Fahrzeuginformationssignal jedes Fahrzeugs, insbesondere zusätzlich, das Leerfahrzeugmassesignal des jeweiligen Fahrzeugs.

Bevorzugt ist jedem Fahrzeug eine, insbesondere eindeutige, Fahrzeugidentifikationsinformation zugeordnet. Die Fahrzeugidentifikationsinformation jedes Fahrzeugs ist oder wird z.B. in der Speichereinheit der Auswerteeinheit gespeichert und/oder ist in dem jeweiligen Fahrzeug gespeichert und/oder hinterlegt und/oder ist oder wird beispielsweise mittels der Sendeeinheit des jeweiligen Fahrzeugs an die Auswerteeinheit, vorzugsweise drahtlos und/oder per Funk, übertragbar und/oder übertragen. Vorteilhaft ist oder wird jeder in der Speichereinheit der Auswerteeinheit gespeicherten Fahrzeugidentifikationsinformation das zugehörige Leerfahrzeugmassesignal zugeordnet. Bevorzugt umfasst das wenigstens eine Fahrzeuginformationssignal jedes Fahrzeugs, insbesondere zusätzlich, die Fahrzeugidentifikationsinformation des jeweiligen Fahrzeugs.

Die Fahrzeuge sind insbesondere Kraftfahrzeuge. Bevorzugt werden die Fahrzeuge bereitgestellt. Vorzugsweise fahren die Fahrzeuge oder mehrere der Fahrzeuge auf den Fahrbahnen.

Gemäß einer Ausgestaltung wird für wenigstens eine der Fahrbahnen ein Fahrbahnbelag-Material aus einer Mehrzahl unterschiedlicher Fahrbahnbelag-Materialien in Abhängigkeit von dem zugehörigen wenigstens einen Fahrbahnbelastungssignal ausgewählt. Bevorzugt wird das ausgewählte Fahrbahnbelag-Material, insbesondere anschließend, als Material für den Fahrbahnbelag dieser wenigstens einen Fahrbahn verwendet und/oder verbaut. Somit ist es möglich, das Material des Fahrbahnbelags belastungsgerecht auszuwählen. Vorteilhaft sind die unterschiedlichen Fahrbahnbelag-Materialien für unterschiedliche Fahrbahnbelastungen geeignet.

Gemäß einer Weiterbildung weist wenigstens eines der Fahrzeuge eine Schwingungserfassungseinheit auf, mittels welcher wenigstens eine Fahrzeugschwingung des wenigstens einen Fahrzeugs erfasst und wenigstens ein diese Fahrzeugschwingung charakterisierendes Fahrzeugschwingungssignal erzeugt wird. Bevorzugt wird das wenigstens eine Fahrzeugschwingungssignal mit wenigstens einem vorgegebenen Referenzschwingungssignal verglichen, wobei in Abhängigkeit von dem Vergleichsergebnis wenigstens ein einen Verschleißzustand der Fahrbahn, dem das wenigstens eine Fahrzeug zugeordnet ist, charakterisierendes Fahrbahnverschleißsignal erzeugt wird. Somit ist es z.B. möglich, den Verschleißzustand dieser Fahrbahn zu ermitteln. Vorzugsweise ist die Schwingungserfassungseinheit durch die Ladungsmasseerfassungseinheit des wenigstens einen Fahrzeugs gebildet. Beispielsweise ist die Schwingungserfassungseinheit durch wenigstens einen oder durch den wenigstens einen Höhenstandsensor des wenigstens einen Fahrzeugs gebildet. Alternativ ist die Schwingungserfassungseinheit z.B. durch wenigstens einen oder durch den wenigstens einen Drucksensor des wenigstens einen Fahrzeugs gebildet, insbesondere wenn dieses eine Luftfederung aufweist.

Bevorzugt wird das wenigstens eine Fahrzeugschwingungssignal mittels der Auswerteeinheit mit dem wenigstens einen vorgegebenen Referenzschwingungssignal verglichen. Vorzugsweise wird in Abhängigkeit von dem Vergleichsergebnis das wenigstens eine Fahrbahnverschleißsignal mittels der Auswerteeinheit erzeugt. Vorteilhaft ist oder wird das wenigstens eine Fahrzeugschwingungssignal, insbesondere mittels der Sendereinheit, vorzugsweise drahtlos und/oder per Funk, an die Auswerteeinheit übertragbar und/oder übertragen. Bevorzugt umfasst das wenigstens eine Fahrzeuginformationssignal des wenigstens einen Fahrzeugs, insbesondere zusätzlich, das wenigstens eine Fahrzeugschwingungssignal des wenigstens einen Fahrzeugs.

Das wenigstens eine vorgegebene Referenzschwingungssignal des wenigstens einen Fahrzeugs ist oder wird z.B. in der Speichereinheit gespeichert und/oder ist in dem wenigstens einen Fahrzeug gespeichert und/oder hinterlegt und/oder ist oder wird beispielsweise mittels der Sendeeinheit des wenigstens einen Fahrzeugs an die Auswerteeinheit, vorzugsweise drahtlos und/oder per Funk, übertragbar und/oder übertragen. Vorteilhaft ist oder wird der in der Speichereinheit gespeicherten Fahrzeugidentifikationsinformation des wenigstens einen Fahrzeugs das zugehörige wenigstens eine vorgegebene Referenzschwingungssignal zugeordnet.

Die Erfindung wird nachfolgend anhand einer bevorzugten Ausführungsform unter Bezugnahme auf die Zeichnung beschrieben. In der Zeichnung zeigen:
Fig. 1 eine schematische Darstellung eines Fahrzeugs und einer Auswerteeinheit und
Fig. 2 eine detailliertere Darstellung der Auswerteeinheit.

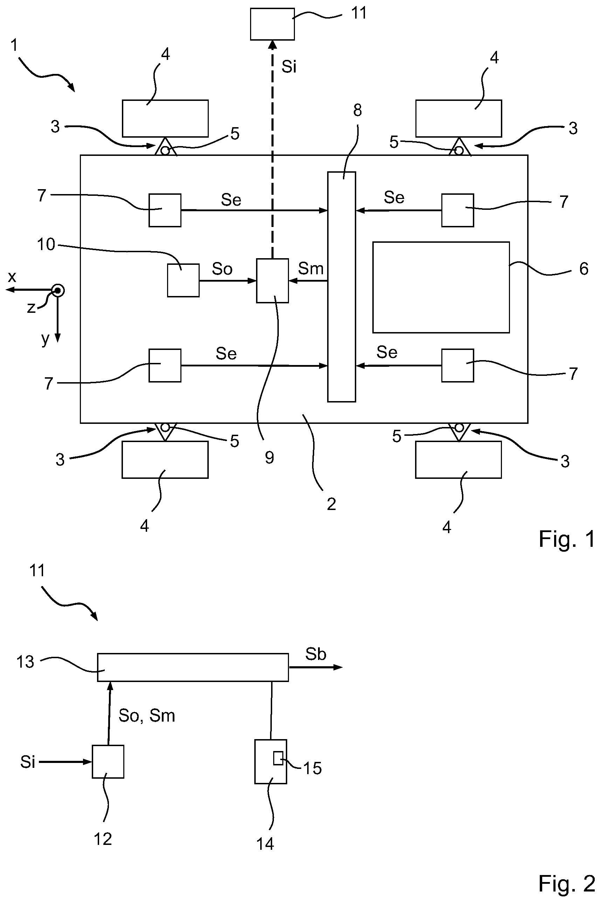

Aus Fig. 1 ist eine schematische Darstellung eines Fahrzeugs 1 ersichtlich, welches einen Fahrzeugaufbau 2 und mehrere über Radaufhängungen 3 mit dem Fahrzeugaufbau 2 verbundene Fahrzeugräder 4 aufweist, die ferner in einer Fahrzeughochrichtung z durch schematisch angedeutete Fahrzeugfedern 5 an dem Fahrzeugaufbau 2 abgestützt sind. Die Fahrzeughochrichtung z verläuft in Fig. 1 insbesondere senkrecht zur Zeichenebene. Ergänzend sind eine Fahrzeuglängsrichtung x und eine Fahrzeugquerrichtung y dargestellt, wobei die Richtungen x, y und z in dieser Reihenfolge insbesondere ein Rechtssystem bilden. Die gewöhnliche Vorwärtsfahrtrichtung des Fahrzeugs 1 verläuft vorzugsweise in Fahrzeuglängsrichtung x.

Der Fahrzeugaufbau 2 trägt eine Fahrzeugladung 6, deren Masse auch als Fahrzeugladungsmasse bezeichnet wird. Diese Masse führt zu einer Einfederung der Fahrzeugräder 4 gegenüber dem Fahrzeugaufbau 2 in Fahrzeughochrichtung z, wobei die Einfederung der Fahrzeugräder 4 mittels mehrerer Höhenstandsensoren 7 erfasst wird. Die Höhenstandsensoren 7 sind mit einer Ladungsmasseerfassungseinheit 8 verbunden, mittels welcher aus von den Höhenstandsensoren 7 gelieferten Einfederungssignalen Se die Fahrzeugladungsmasse bestimmt und ein diese charakterisierendes Fahrzeugladungsmassesignal Sm erzeugt und an eine Sendeeinheit 9 abgegeben wird. Die Höhenstandsensoren 7 werden bevorzugt der Ladungsmasseerfassungseinheit 8 zugerechnet. Obwohl mehrere, beispielsweise drei oder vier, Höhenstandsensoren 7 bevorzugt sind, ist es auch möglich, lediglich einen oder zwei Höhenstandsensoren 7 zu verwenden. Aus diesem Grund ist insbesondere wenigstens ein Höhenstandsensor vorgesehen.

Das Fahrzeug 1 weist ferner eine Ortungseinheit 10 auf, mittels welcher der Ort des Fahrzeugs 1 erfasst und ein diesen Ort charakterisierendes Fahrzeugortssignal So erzeugt und an die Sendeeinheit 9 abgegeben wird. Der Ort das Fahrzeugs 1 wird insbesondere auch als Fahrzeugort bezeichnet. Der oder die Höhenstandsensoren 7, die Ladungsmasseerfassungseinheit 8, die Sendeeinheit 9 und die Ortungseinheit 10 sind an oder in dem Fahrzeug 1 vorgesehen.

Die Sendeeinheit 9 überträgt ein Fahrzeuginformationssignal Si an eine entfernt von dem Fahrzeug 1 vorgesehene Auswerteeinheit 11, die in detaillierterer Darstellung aus Fig. 2 ersichtlich ist. Das Fahrzeuginformationssignal Si umfasst insbesondere das Fahrzeugladungsmassesignal Sm und das Fahrzeugortssignal So.

Die Auswerteeinheit 11 umfasst eine Empfangseinheit 12, mittels welcher das Fahrzeuginformationssignal Si empfangbar ist, eine Recheneinheit 13 und eine Speichereinheit 14, in der in elektronischer Form eine Straßenkarte 15 gespeichert ist, die Informationen über den örtlichen Verlauf mehrerer Fahrbahnen umfasst.

Mittels der Recheneinheit 13 wird durch Auswertung des Fahrzeugortssignals So und der Straßenkarte das Fahrzeug 1 einer der Fahrbahnen zugeordnet. Bevorzugt werden zusätzliche Fahrzeuge in entsprechender Weise dieser Fahrbahn zugeordnet. Anschließend wird mittels der Recheneinheit 13 für diese Fahrbahn durch Auswertung der Fahrzeugladungsmassesignale Sm der dieser Fahrbahn zugeordneten Fahrzeuge 1 ein die Fahrbahnbelastung dieser Fahrbahn charakterisierendes Fahrbahnbelastungssignal Sb erzeugt.

Bevorzugt erhält die Auswerteeinheit 11 von anderen Fahrzeugen entsprechende Fahrzeuginformationssignale, wobei diese Fahrzeuge auf andere Fahrbahnen fahren. In diesem Fall sind für die anderen Fahrbahnen entsprechende Fahrbahnbelastungssignale erzeugbar.

### Bezugszeichen

- 1: Fahrzeug
- 2: Fahrzeugaufbau
- 3: Radaufhängung
- 4: Fahrzeugrad
- 5: Fahrzeugfeder
- 6: Fahrzeugladung
- 7: Höhenstandsensor
- 8: Ladungsmasseerfassungseinheit
- 9: Sendeeinheit
- 10: Ortungseinheit
- 11: Auswerteeinheit
- 12: Empfangseinheit
- 13: Recheneinheit
- 14: Speichereinheit
- 15: Straßenkarte
- Se: Einfederungssignal
- Sm: Fahrzeugladungsmassesignal
- So: Fahrzeugortssignal
- Si: Fahrzeuginformationssignal
- Sb: Fahrbahnbelastungssignal
- x: Fahrzeuglängsrichtung
- y: Fahrzeugquerrichtung
- z: Fahrzeughochrichtung

## Patentansprüche

1. Verfahren zum Erfassen von Fahrbahnbelastungen, wobei
- eine Straßenkarte (15) bereitgestellt wird, die Informationen über den örtlichen Verlauf mehrerer Fahrbahnen umfasst,
- für mehrere Fahrzeuge (1) jeweils ein Fahrzeugort erfasst und wenigstens ein diesen Fahrzeugort charakterisierendes Fahrzeugortssignal (So) bereitgestellt wird,
- die Fahrzeuge (1) unter Verwendung der Fahrzeugortssignale (So) und der Straßenkarte den Fahrbahnen zugeordnet werden,
- für jedes Fahrzeug (1) eine Fahrzeugladungsmasse erfasst und wenigstens ein diese Fahrzeugladungsmasse charakterisierendes Fahrzeugladungsmassesignal (Sm) bereitgestellt wird, und
- für jede Fahrbahn unter Verwendung der Fahrzeugladungsmassesignale (Sm) der ihr zugeordneten Fahrzeuge (1) wenigstens ein eine Fahrbahnbelastung charakterisierendes Fahrbahnbelastungssignal (Sb) erzeugt wird.

2. Verfahren nach Anspruch 1, **dadurch gekennzeichnet, dass** jedes Fahrzeug (1) eine Ladungsmasseerfassungseinheit (8) aufweist, mittels welcher für das jeweilige Fahrzeug (1) die Fahrzeugladungsmasse erfasst und das wenigstens eine Fahrzeugladungsmassesignal (Sm) bereitgestellt wird.

3. Verfahren nach Anspruch 2, **dadurch gekennzeichnet, dass** bei wenigstens einem der Fahrzeuge (1) die Ladungsmasseerfassungseinheit (8) wenigstens einen Höhenstandsensor (7) umfasst, mittels welchem eine Einfederung des Fahrzeugs (1) erfasst wird.

4. Verfahren nach Anspruch 2 oder 3, **dadurch gekennzeichnet, dass** wenigstens eines oder wenigstens ein anderes der Fahrzeuge (1) eine ein gasförmiges Federmedium umfassende Luftfederung aufweist und dessen Ladungsmasseerfassungseinheit (8) wenigstens einen Drucksensor umfasst, mittels welchem ein Druck des Federmediums erfasst wird.

5. Verfahren nach einem der vorangehenden Ansprüche, **dadurch gekennzeichnet, dass** jedes Fahrzeug (1) eine Ortungseinheit (10) aufweist, mittels welcher für das jeweilige Fahrzeug (1) der Fahrzeugort erfasst und das wenigstens eine Fahrzeugortssignal (So) bereitgestellt wird.

6. Verfahren nach Anspruch 5, **dadurch gekennzeichnet, dass** bei wenigstens einem der Fahrzeuge (1) die Ortungseinheit (10) ein globales Positionsbestimmungssystem umfasst, mittels welchem die globale Position des Fahrzeugs (1) erfasst wird.

7. Verfahren nach Anspruch 5 oder 6, **dadurch gekennzeichnet, dass** die Fahrbahnbelastungssignale (Sb) mittels einer mit der Ladungsmasseerfassungseinheit (8) und der Ortungseinheit (10) jedes Fahrzeugs (1) per Funk verbindbaren Auswerteeinheit (11) erzeugt werden, die entfernt von den Fahrzeugen vorgesehen ist.

8. Verfahren nach einem der vorangehenden Ansprüche, **dadurch gekennzeichnet, dass** jedem Fahrzeug (1) ein Leerfahrzeugmassesignal zugeordnet wird, welches die Masse des jeweiligen Fahrzeugs im unbeladenen Zustand charakterisiert, wobei für jede Fahrbahn das wenigstens eine Fahrbahnbelastungssignal (Sb) zusätzlich unter Verwendung der Leerfahrzeugmassesignale der ihr zugeordneten Fahrzeuge erzeugt wird.

9. Verfahren nach einem der vorangehenden Ansprüche, **dadurch gekennzeichnet, dass** für wenigstens eine der Fahrbahnen ein Fahrbahnbelag-Material aus einer Mehrzahl unterschiedlicher Fahrbahnbelag-Materialien in Abhängigkeit von dem zugehörigen wenigstens einen Fahrbahnbelastungssignal (Sb) ausgewählt und als Material für den Fahrbahnbelag dieser wenigstens einen Fahrbahn verwendet wird.

10. Verfahren nach einem der vorangehenden Ansprüche, **dadurch gekennzeichnet, dass**
- wenigstens eines der Fahrzeuge (1) eine Schwingungserfassungseinheit aufweist, mittels welcher wenigstens eine Fahrzeugschwingung des wenigstens einen Fahrzeugs (1) erfasst und wenigstens ein diese Fahrzeugschwingung charakterisierendes Fahrzeugschwingungssignal erzeugt wird, welches mit wenigstens einem vorgegebenen Referenzschwingungssignal verglichen wird, wobei in Abhängigkeit von dem Vergleichsergebnis wenigstens ein einen Verschleißzustand der Fahrbahn, dem das wenigstens eine Fahrzeug (1) zugeordnet ist, charakterisierendes Fahrbahnverschleißsignal erzeugt wird.

11. Verfahren nach Anspruch 10, **dadurch gekennzeichnet, dass** die Schwingungserfassungseinheit durch die Ladungsmasseerfassungseinheit (8) des wenigstens einen Fahrzeugs (1) gebildet ist.

## Claims

1. Method for detecting road loads, wherein
- a road map (15) comprising information about the local course of a plurality of roads is provided,
- a vehicle location is detected for each of a plurality of vehicles (1), and at least one vehicle location signal (So) characterizing this vehicle location is provided,
- the vehicles (1) are assigned to the roads using the vehicle location signals (So) and the road map,
- a vehicle load mass is detected for each vehicle (1), and at least one vehicle load mass signal (Sm) characterizing this vehicle load mass is provided, and
- at least one road load signal (Sb) characterizing a road load is generated for each road using the vehicle load mass signals (Sm) from the vehicles (1) assigned to it.

2. Method according to Claim 1, **characterized in that** each vehicle (1) has a load mass detection unit (8), by means of which the vehicle load mass is detected for the respective vehicle (1) and the at least one vehicle load mass signal (Sm) is provided.

3. Method according to Claim 2, **characterized in that**, in at least one of the vehicles (1), the load mass detection unit (8) comprises at least one height sensor (7) which is used to detect a deflection of the vehicle (1).

4. Method according to Claim 2 or 3, **characterized in that** at least one or at least one other of the vehicles (1) has an air suspension comprising a gaseous spring medium and its load mass detection unit (8) comprises at least one pressure sensor which is used to detect a pressure of the spring medium.

5. Method according to one of the preceding claims, **characterized in that** each vehicle (1) has a locating unit (10), by means of which the vehicle location is detected for the respective vehicle (1) and the at least one vehicle location signal (So) is provided.

6. Method according to Claim 5, **characterized in that**, in at least one of the vehicles (1), the locating unit (10) comprises a global positioning system which is used to detect the global position of the vehicle (1).

7. Method according to Claim 5 or 6, **characterized in that** the road load signals (Sb) are generated by means of an evaluation unit (11) which can be connected by radio to the load mass detection unit (8) and the locating unit (10) of each vehicle (1) and is provided away from the vehicles.

8. Method according to one of the preceding claims, **characterized in that** each vehicle (1) is assigned an empty vehicle mass signal which characterizes the mass of the respective vehicle in the unladen state, wherein the at least one road load signal (Sb) is additionally generated for each road using the empty vehicle mass signals from the vehicles assigned to it.

9. Method according to one of the preceding claims, **characterized in that**, for at least one of the roads, a road surfacing material is selected from a plurality of different road surfacing materials on the basis of the associated at least one road load signal (Sb) and is used as the material for the road surface of this at least one road.

10. Method according to one of the preceding claims, **characterized in that**
- at least one of the vehicles (1) has a vibration detection unit, by means of which at least one vehicle vibration of the at least one vehicle (1) is detected and at least one vehicle vibration signal characterizing this vehicle vibration is generated, which vehicle vibration signal is compared with at least one predefined reference vibration signal, wherein, depending on the comparison result, at least one road wear signal characterizing a wear state of the road, to which the at least one vehicle (1) is assigned, is generated.

11. Method according to Claim 10, **characterized in that** the vibration detection unit is formed by the load mass detection unit (8) of the at least one vehicle (1).

## Revendications

1. Procédé de détection de charges routières, dans lequel
- une carte routière (15) comprenant des informations concernant la trajectoire locale de plusieurs routes est fournie,
- pour plusieurs véhicules (1), une position de véhicule est détectée et au moins un signal de position de véhicule (So) caractérisant cette position de véhicule est fourni,
- les véhicules (1) sont associés aux routes à l'aide des signaux de position de véhicule (So) et de la carte routière,
- pour chaque véhicule (1), une masse de chargement de véhicule est détectée et au moins un signal de masse de chargement de véhicule (Sm) caractérisant cette masse de chargement de véhicule est fourni, et
- pour chaque route, au moins un signal de charge routière (Sb) caractérisant la charge routière est généré à l'aide des signaux de masse de chargement de véhicule (Sm) des véhicules (1) qui lui sont associés.

2. Procédé selon la revendication 1, **caractérisé en ce que** chaque véhicule (1) comporte une unité de détection de masse de chargement (8) au moyen de laquelle la masse de chargement de véhicule est détectée pour le véhicule respectif (1) et ledit au moins un signal de masse de chargement de véhicule (Sm) est fourni.

3. Procédé selon la revendication 2, **caractérisé en ce que**, pour au moins l'un des véhicules (1), l'unité de détection de masse de chargement (8) comprend au moins un capteur de hauteur (7) au moyen duquel une compression de la suspension du véhicule (1) est détectée.

4. Procédé selon la revendication 2 ou 3, **caractérisé en ce qu'**au moins l'un ou au moins un autre des véhicules (1) comporte une suspension pneumatique comprenant un fluide de suspension gazeux et dont l'unité de détection de masse de chargement (8) comprend au moins un capteur de pression au moyen duquel la pression du fluide de suspension est détectée.

5. Procédé selon l'une des revendications précédentes, **caractérisé en ce que** chaque véhicule (1) comporte une unité de localisation (10) au moyen de laquelle, pour le véhicule (1) respectif, la position de véhicule est détectée et ledit au moins un signal de position de véhicule (So) est fourni.

6. Procédé selon la revendication 5, **caractérisé en ce que**, pour au moins l'un des véhicules (1), l'unité de localisation (10) comprend un système de positionnement global, au moyen duquel la position globale du véhicule (1) est détectée.

7. Procédé selon la revendication 5 ou 6, **caractérisé en ce que** les signaux de charge routière (Sb) sont générés au moyen d'une unité d'évaluation (11) qui peut être reliée par radio à l'unité de détection de masse de chargement (8) et à l'unité de localisation (10) de chaque véhicule (1), et qui est prévue à distance des véhicules.

8. Procédé selon l'une des revendications précédentes, **caractérisé en ce qu'**un signal de masse de véhicule à vide est associé à chaque véhicule (1), lequel caractérise la masse du véhicule respectif à l'état non chargé, ledit au moins un signal de charge routière (Sb) étant en outre généré pour chaque route à l'aide des signaux de masse de véhicule à vide des véhicules qui lui sont associés.

9. Procédé selon l'une des revendications précédentes, **caractérisé en ce que**, pour au moins l'une des routes, un matériau de revêtement routier est sélectionné parmi une pluralité de matériaux de revêtement routier différents en fonction du signal de charge routière (Sb) associé et est utilisé comme matériau pour le revêtement routier de ladite au moins une route.

10. Procédé selon l'une des revendications précédentes, **caractérisé en ce que**
- au moins l'un des véhicules (1) comporte une unité de détection de vibrations au moyen de laquelle au moins une vibration de véhicule dudit au moins un véhicule (1) est détectée et au moins un signal de vibration de véhicule caractérisant cette vibration de véhicule est généré, lequel est comparé à au moins un signal de vibration de référence prédéfini, au moins un signal d'usure de route qui caractérise un état d'usure de la route auquel est associé ledit au moins un véhicule (1) étant généré en fonction du résultat de la comparaison.

11. Procédé selon la revendication 10, **caractérisé en ce que** l'unité de détection de vibrations est constituée par l'unité de détection de masse de chargement (8) dudit au moins un véhicule (1).
